# EUROPEAN PATENT SPECIFICATION

(11) **EP 0 826 114 B1**
(45) Date of publication and mention of the grant of the patent: **18.10.2000**
(21) Application number: 96917781.5
(22) Date of filing: 03.06.1996
(51) Int. Cl.: F16D 65/10

(54) **A BRAKE NOISE REDUCING DEVICE**
VORRICHTUNG ZUR REDUZIERUNG VON BREMSGERÄUSCHEN
DISPOSITIF REDUCTEUR DE BRUIT DE FREINS

(30) Priority: 06.06.1995 SE 9502047
(43) Date of publication of application: 04.03.1998
(73) Proprietor: Camph, Sven, 236 00 Höllviksnäs (SE)
(72) Inventor: Camph, Sven, 236 00 Höllviksnäs (SE)
(74) Representative: Larsen, Stig
(86) International application number: SE9600729
(87) International publication number: WO9639587

(56) References cited:
- SE-A- 9 303 358
- SE-C- 169 633
- US-A- 3 035 667

## Description

### Technical Field

The present invention relates to a device for reducing or eliminating brake noise in heavy vehicles provided with drum brakes and of the type comprising a dampening layer of a material being at least partly elastically deformable, said layer being located between the outside of the brake drum and a surrounding, coaxially mounted, pre-stressed steel ring, said steel ring being solid with a uniform cross section and comprising a radial, rewelded cut.

The invention also relates to a tool for the manufacture of such device.

### Background of the Invention

Brake noise developed during activation of vehicle brakes is a nuisance, especially in town traffic. Large vehicles such as buses running a scheduled route may be intolerable to those living near bus stops, and it is impossible to predetermine whether or not a new bus is going to develop brake noise at a later stage. It is also difficult to investigate the reason why the brakes are screaming or making noise. It is believed that the braking surfaces of a brake drum may be primarily responsible for initiating brake noise, but other details in the vehicle and/or the brake design may have an adverse effect on the transmission or amplifying of the noise. E.g. an excessive play in the journalling of the bolts carrying the brake shoes of a drum brake could be responsible for amplifying a noise initiated by other elements.

Many attempts have been made in order to reduce brake noise.

The US Patent Specification 3,035,667 relates to a brake drum provided with a layer of inorganic material on the cylindrical outside of the drum, said layer being kept in place by a surrounding thin steel ring.

The Swedish Patent Specification 169 633 shows a brake drum which near its open end is provided with a pre-stressed silicon rubber layer.

The French Patent Specification No. 672,425 shows a single strap directly applied to the outside of a brake drum and exerting a compression force on the drum.

None of the previously proposed solutions have proved to be successful. They all lose their effect - at least after a shorter period - due to parts becoming loose.

### Object of the Invention

The present invention has for its object to provide a device which is reliable during use and keeps its full noise reducing function during the life time of the vehicle brake.

### Summary of the Invention

The present invention provides a device for reducing or eliminating brake noise of the type referred to above, said device being characterised by a steel sheet welded to the inner cylindrical surface of the ring near the ring opening, said sheet being arranged concentrically with regard to the inner cylindrical surface of the ring and extending from one side of the ring opening to the other one.

This feature makes it possible to use and fit dampening rings of a much greater size without causing harm to the brake drum and thus obtain a much more effective noise dampening.

### Brief Description of the Drawing

Figure 1 is a simplified axial view - partly in section - of a conventional drum brake of the type used in many buses,
Figure 2 is a section along the line II-II in Figure 1,
Figure 3 shows a part of a brake drum after initiating the mounting of a device according to the invention,
Figures 4, 5 and 6 show later stages during the mounting of the device for reducing brake noise, and
Figure 7 shows the brake drum provided with the device according to the invention.

### Detailed Description of the Invention

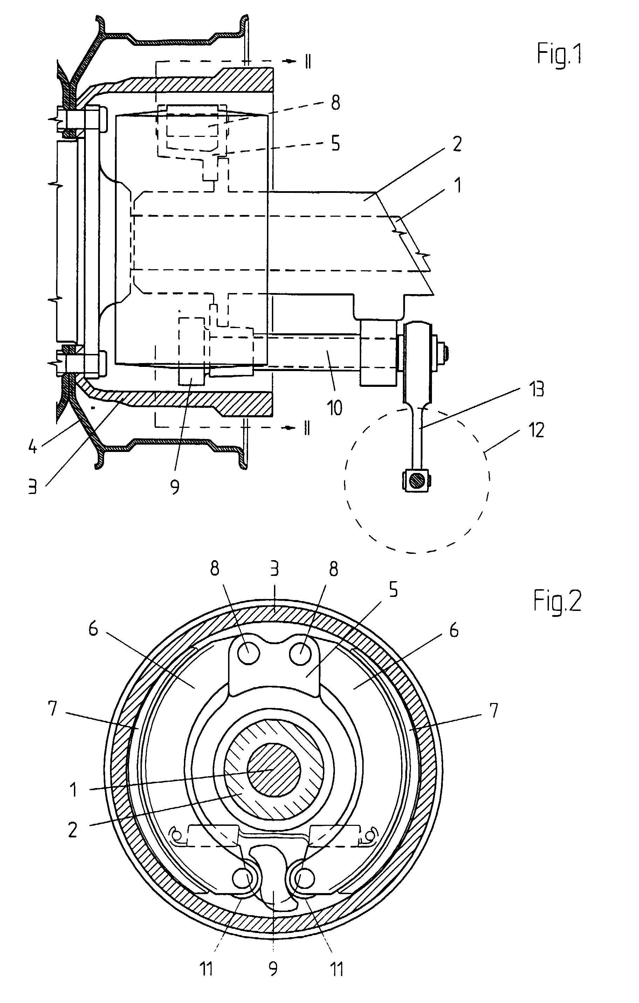

The conventional drum brake shown in Figures 1 and 2 comprises a rotatable wheel axle 1 journalled in an axle housing 2 carrying the vehicle chassis - not shown. The axle 1 is rigidly connected to a brake drum 3 and to a wheel 4.The stationary axle housing 2 carries a brake mounting plate 5 in which two brake shoes 6 having brake linings 7 are pivotally supported at 8. A brake key 9 is mounted at the end of a key shaft 10 and is adapted to engage and separate the lower, roller provided ends 11 of the brake shoes if turned. Activation of the key shaft 10 is performed by a piston-cylinder unit 12 supported by the axle housing 2 and connected to the shaft 10 via a brake arm 13.

The brake mechanism described will operate as follows:

Upon activation of the piston-cylinder unit 12 the key shaft 10 is turned and the key 9 will force the lower ends of the brake shoes 6 apart so as to cause the brake linings 7 to engage the inner cylindrical surface of the brake drum 3.

The braking may often cause noise. Such noise may be due to a number of reasons. It could be caused by the material in the friction surfaces. It could also be caused by an excessive play in the journalling of the brake shoes or of the key shaft. It could be due to a combination of many different reasons, so it is really impossible to investigate the cause and thus to design a brake of this type which for sure will not emit noise during its life time. It must be recognised that some brakes will cause noise and others will not.

In case a brake emits noise the mounting of the device according to the invention will completely eliminate the noise.

The first step in the procedure of mounting a device according to the invention is to remove the wheel 4 adjacent to the noisy brake. The brake will have the appearance as shown in Figure 2.

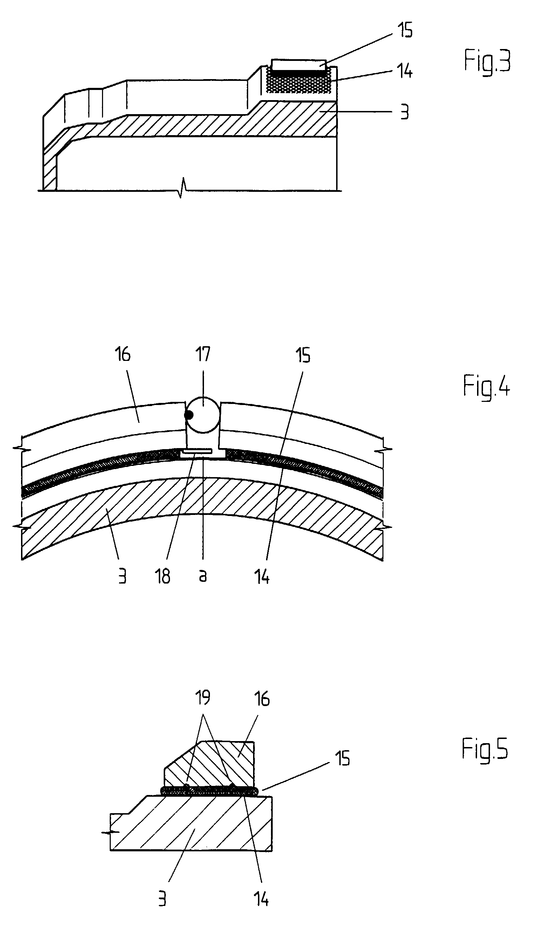

Now a layer 14 - being about 1 mm thick - of a heat-insulating, heat resistant material, such as fibre-glass web, is applied to the outside of the brake drum 3 near the opening of the drum. The surface of the brake drum is not machined. Secondly a layer 15 of an elastic, heat resistant material, such as silicon rubber, is applied to the outside of the layer 14. The cross section of the layer 15 may be 40 mm x 5 mm. The two layers 14 and 15 extend circumferentally around the drum 3 except for a small part **a**, shown in Figure 4.

The next stage is to mount a steel ring 16 - partly shown in Figure 4 - to surround the two layers 14 and 15. The said steel ring has originally been manufactured with an inner diameter almost corresponding to the outer diameter of the drum surface carrying the layers 14 and 15. The ring 16 has been opened by a radial cut and has been forced more open by inserting and securing by spot welding a spacer 17 between the ring end surfaces at the ring opening. After the ring 16 has been passed to surround the layers 14 and 15 in such relative angular position that the ring opening is located near the part **a**, the spacer 17 is knocked off and the ring 16 will now forcibly engage the layer 15. As will be seen in Figure 4 the ring 16 has been provided with a small steel sheet 18 welded to the inner cylindrical surface of the ring 16 near the ring opening, the said sheet 18 being directed concentrically towards the inner cylindrical surface of the ring 16 on the other side of the ring opening. The ring 16 may be about 25 mm thick which almost corresponds to the thickness of the adjacent part of the brake drum 3.

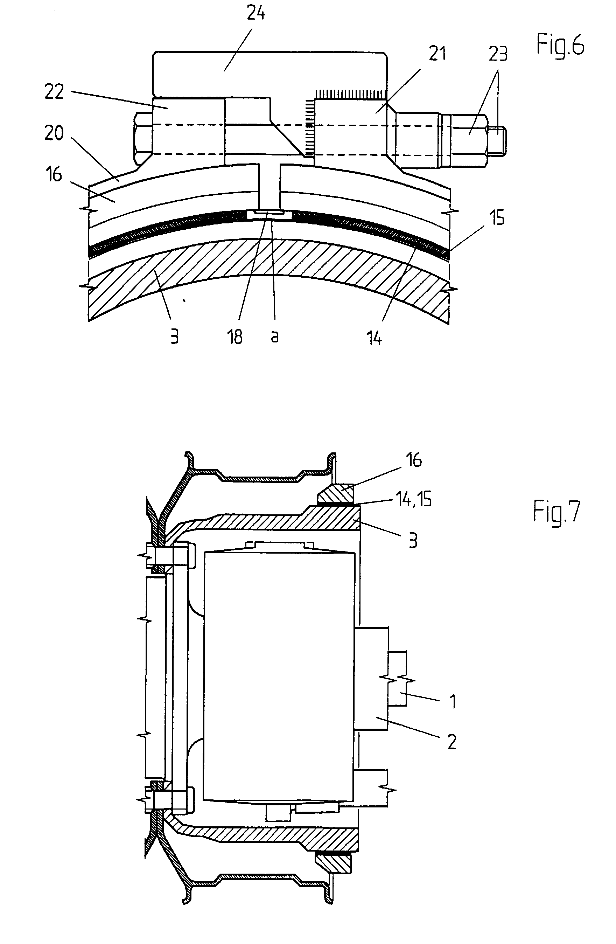

The ring 16 is at its inner, cylindrical surface provided with two circumferentially machined grooves 19 into which a part of the elastic layer 15 is pressed. Thus a dog clutch is provided between the ring 16 and the layer 15. The ring 16 has a uniform cross section along its length and its radial dimension decreases in the direction away from the open end of the brake drum as shown in Figure 5.

A spanner tool having the shape of an open ring 20 , the ring ends 21,.22 of which are interconnected by a bolt-nut device 23, is now applied to fit around the ring 16 as shown in Figure 6. By tightening the bolt-nut device 23 a tangential force will arise. Said force will cause the ring 16 to engage the layer 15 with a strong radial force. The tangential force in the bolt-nut device 23 will tend to bend the device 23. Such bending is a nuisance as it will cause extra friction in the device 23. In order to prevent such bending the tool ends 21 and 22 are both provided with a guide rail 24 welded to the top surface of the respective tool ring end and extending to slidably engage a plane top surface of the other ring end. In Figure 6 only the rail 24 welded to the top surface of the tool end 21 has been shown. The contact between the two rails and the top surfaces of the oppositely located tool ends will ensure a linear movement of the parts of the bolt-nut device 23.

Now the ends of the ring 16 are welded together to form a continuous ring, the sheet 18 protecting the brake drum 3 against the heat developed during the welding operation.

The spanner tool 20-24 is now removed and after mounting of the wheel 4 the applied device has the appearance shown in Figure 7.

Compared with the prior art devices for reducing brake noise the device according to the present invention may comprise a substantially heavier pre-stressed ring to surround the layers 14 and 15. The application of the exceptionally high force is only practically possible when using the claimed spanner tool , and the welding of the heavy dampening ring is only possible due to the protective metal sheet 18.

## Claims

1. A device for reducing or eliminating brake noise in heavy vehicles provided with drum brakes and of the type comprising a dampening layer (14, 15) of a material being at least partly elastically deformable, said layer being located between the outside of the brake drum (3) and a surrounding, coaxially mounted, pre-stressed steel ring (16), said steel ring (16) being solid, with a uniform cross section and comprising a radial, rewelded cut,
characterised by a steel sheet (18) welded to the inner cylindrical surface of the ring (16) near the ring opening, said sheet (18) being arranged concentrically with regard to the inner cylindrical surface of the ring (16) and extending from one side of the ring opening to the other one.

2. A tool for applying a radially directed compression force to the steel ring (16) being part of the device according to claim 1, said tool comprising an open ring (20) and a bolt-nut connection (23) at the tool ring opening for altering the diameter of the open ring (20),
characterised in that the tool ring ends (21, 22) in the area of the bolt-nut connection (23) are overlapping and contacting each other by rails (24) having plane surfaces which are parallel to the axis of the bolt-nut connection (23).

## Patentansprüche

1. Vorrichtung zum Vermeiden oder Reduzieren von Bremsgeräuschen in schweren Kraftfahrzeugen, die mit Trommelbremsen versehen sind und von der Art die eine dämpfende mindestens teilweis elastische Materialschicht (14,15) umfasst, wobei diese Schicht zwischen der Aussenseite der Bremstrommel (3) und einem umgebenden, vorgespannten Stahlring angeordnet ist, und wobei dieser Stahlring massiv mit einheitlicher Quersektion und mit einem zusammengeschweissten radialgerichteten Schnitt versehen ist,
**gekennzeichnet durch** einen- Stahblech (18) der an der inneren zylindrischen Fläche des Stahlrings (16) in der Nähe des Ringschnittes angeschweisst ist , und dass das Stahlblech (18) in koncentrischer Weise im Verhältnis zu der inneren Oberfläche des Stahlringes (16) angeordnet ist, wobei das Stahlblech sich von der einen Seite zu der anderen Seite der Ringöffnung erstreckt.

2. Ein Werkzeug zum Erzeugen einer radial gerichteten Kompressionsspannung am Stahlring (16) in der Vorrichtung nach Anspruch 1, welches Werkzeug einen offenen Ring (20) sowie eine Bolzen-Mutter Verbindung (23) an der Ringöffnung für Veränderung des Durchmessers vom offenen Ring (20) umfasst,
**dadurch gekennzeichnet** dass die Enden (21, 22) des Werkzeugringes in der Nähe der Bolzen-Mutter Verbindung (23) sich überlappen und kontakten, mittels Schienen (24), die mit Planflächen die parallell zur Achse der Bolzen- Mutter Verbindung (23) versehen sind.

## Revendications

1. Dispositif pour réduire ou éliminer le bruit de freinage dans les poids-lourds équipés de freins à tambour et du type comprenant une couche d'amortissement (14, 15) réalisée dans un matériau présentant une déformabilité élastique au moins partielle, ladite couche étant située entre l'extérieur du tambour de frein (3) et une bague d'acier précontraint périphérique montée de manière coaxiale (16), ladite bague d'acier (16) étant solide, avec une section transversale uniforme et comprenant une découpe radiale avec retouche de la soudure, caractérisé par une feuille d'acier (18) soudée à la surface cylindrique intérieure de la bague (16) à proximité de l'ouverture de la bague, ladite feuille (18) étant agencée de manière concentrique par rapport à la surface cylindrique intérieure de la bague (16) et s'étendant depuis un côté de l'ouverture de la bague vers l'autre côté.

2. Outil pour appliquer une force de compression dirigée radialement sur la bague d'acier (16) faisant partie du dispositif selon la revendication 1, ledit outil comprenant une bague ouverte (20) et un raccord à boulon et écrou (23) au niveau de l'ouverture de la bague de l'outil afin de modifier le diamètre de la bague ouverte (20),
caractérisé en ce que les extrémités (21, 22) de la bague de l'outil dans la région du raccord à boulon et écrou (23) se chevauchent et se touchent par l'intermédiaire de rails (24) qui présentent des surfaces planes qui sont parallèles à l'axe du raccord à boulon et écrou (23).
